# EUROPEAN PATENT APPLICATION

(11) **EP 4 201 698 A1**
(43) Date of publication of application: **28.06.2023**
(21) Application number: 22176128.1
(22) Date of filing: 30.05.2022
(51) Int. Cl.: B60B 3/10, B60B 5/02, B60B 21/04, B60B 21/10

(54) **WHEEL RIM**

(30) Priority: 27.12.2021 TW 110148899
(71) Applicant: Advanced International Multitech Co., Ltd., Kaohsiung City 81260 (TW)
(72) Inventor: HSIAO, Te-Fu, 80457 KAOHSIUNG CITY (TW); KUO, Che-Hao, 81260 KAOHSIUNG CITY (TW); CHANG, Chung-Hsin, 81260 KAOHSIUNG CITY (TW); WANG, Chia-Hsin, 81260 KAOHSIUNG CITY (TW); LIU, Erh-Wei, 81260 KAOHSIUNG CITY (TW)
(74) Representative: Regimbeau

(57) **Abstract**

A wheel rim includes a rim body (1), two flanges (2) and two reinforcing structures (3). The rim body (1) surrounds an axis (A) and is made of carbon fiber composite material. The flanges (2) protrude radially and outwardly from an outer peripheral surface of the rim body (1), spaced apart from each other along the axis (A), are made of carbon fiber composite material, and define respectively two spaces (20) therein. The reinforcing structures (3) are respectively received in the spaces (20), and each of the reinforcing structures (3) includes a plurality of fiber bundles (31) fixed in a respective one of the flanges (2). Each of the fiber bundles (31) includes at least two strands (311, 312) of carbon fibers being twisted.

## Description

The disclosure relates to a wheel rim, more particularly to a wheel rim including reinforcing structures.

A wheel rim is a frame of a wheel, is connected to an axle of the wheel via spokes and a hub disposed at the central portion of the wheel, and includes two flanges protruding radially and outwardly from an outer peripheral surface of the wheel rim and defining a space for mounting of a tire. The flanges serve as a structure for securing the tire and thus a sufficient structural strength of the flanges is required to ensure stability and reliability of the wheel rim.

Therefore, an object of the disclosure is to provide a wheel rim having a relatively good structural strength.

According to an aspect of the disclosure, a wheel rim includes a rim body, two flanges and two reinforcing structures. The rim body surrounds an axis and is made of carbon fiber composite material. The flanges protrude radially and outwardly from an outer peripheral surface of the rim body, spaced apart from each other along the axis, are made of carbon fiber composite material, and define respectively two spaces therein. The reinforcing structures are respectively received in the spaces. Each of the reinforcing structures includes a plurality of fiber bundles fixed in a respective one of the flanges. Each of the fiber bundles includes at least two strands of carbon fibers being twisted.

Other features and advantages of the disclosure will become apparent in the following detailed description of the embodiments with reference to the accompanying drawings, of which:
FIG. 1 is a perspective view of a first embodiment of a wheel rim according to the present disclosure;
FIG. 2 is a fragmentary schematic sectional view of reinforcing structures and flanges of the wheel rim of the first embodiment;
FIGS. 3(a) and 3(b) are schematic views illustrating a fiber bundle of each of the reinforcing structures and strands of the fiber bundle being twisted;
FIGS. 4(a) and 4(b) are schematic views illustrating variations of the fiber bundle including a core and two strands wound around the core and twisted together; and
FIG. 5 is a fragmentary schematic sectional view illustrating a second embodiment of the wheel rim according to the present disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

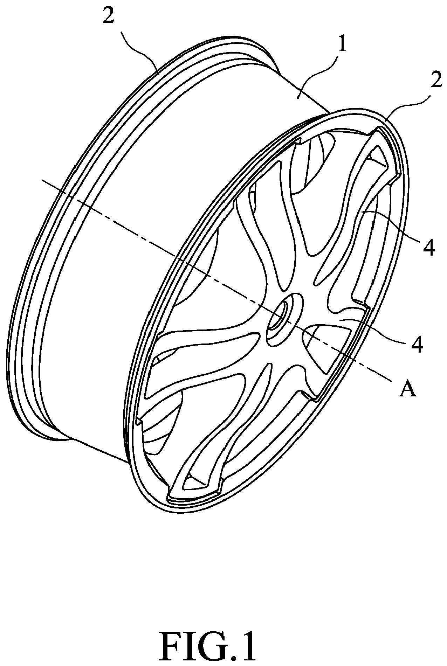

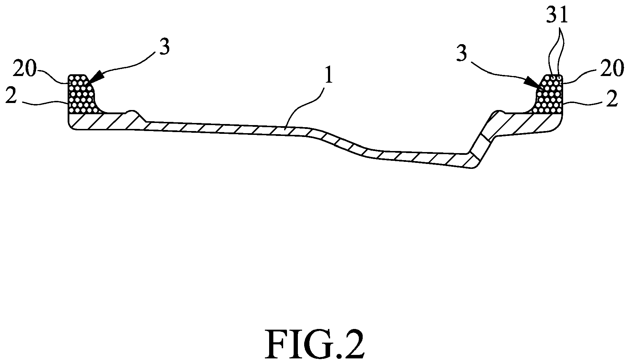

Referring to FIGS. 1 and 2, a first embodiment of a wheel rim according to the present disclosure includes a rim body 1 surrounding an axis (A), two flanges 2 protruding radially and outwardly from an outer peripheral surface of the rim body 1, spaced apart from each other along the axis (A), and defining respectively two spaces 20 therein, and two reinforcing structures 3 respectively received in the spaces 20. In this embodiment, the rim body 1 and the flanges 2 are made of carbon fiber composite material and the wheel rim further includes a plurality of spokes 4 that are also made of carbon fiber composite material and that are formed integrally with the rim body 1 and the flanges 2. In other embodiments, the spokes 4 may be made of an aluminum alloy and are fastened to the rim body 1 after the rim body 1 is separately manufactured.

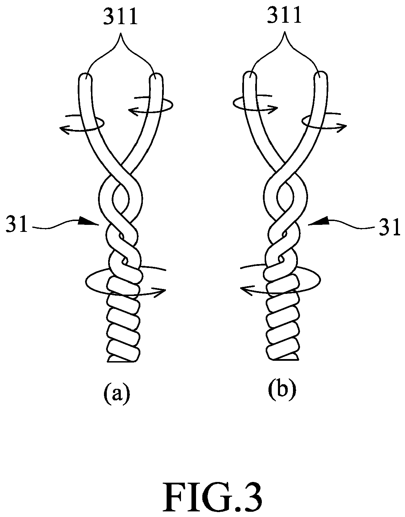

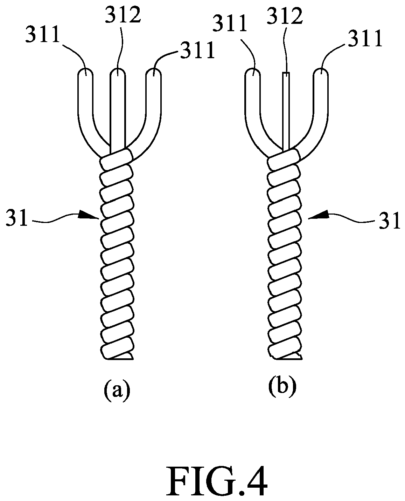

Referring to FIGS. 2 to 4, each of the reinforcing structures 3 includes a plurality of fiber bundles 31 fixed in a respective one of the flanges 2. Each of the fiber bundles 31 includes at least two strands 311 of carbon fibers being twisted. As shown in FIGS. 3(a) and 3(b), each of the fiber bundles 31 includes two of the strands 311 twisted together in a direction opposite to that in which a corresponding one of the fiber bundles 31 is twisted. The direction of the right-hand twist is referred to as a Z-twist, and the direction of the left-hand twist is referred to as a S-twist. That is to say, for each of the fiber bundles 31, the strands 311 are twisted together with one of the S-twist and the Z-twist, and the corresponding one of the fiber bundles 31 is twisted with the other one of the S-twist and the Z-twist. In some variations of the present disclosure, as shown in FIGS. 4(a) and 4(b), each of the fiber bundles 31 includes a core 312 and two of the strands 311 wound around the core 312 and twisted together in a direction opposite to that in which a corresponding one of the fiber bundles 31 is twisted. The strands 311 and the core 312 may be made of a light weight material such as carbon fiber composite material, glass fiber, Kevlar fiber, polyethylene fiber and ceramic fiber, but the present disclosure is not limited to this example. Note that the material for making the core 312 may be the same (see FIG. 4(a)) or different from (see FIG. 4(b)) that for making the strands 311. By virtue of the reinforcing structures 3 each cooperating with a corresponding one of the flanges 2 to form a sandwich structure, the overall structural strength of the wheel rim is increased while not increasing the weight of the wheel rim would significantly.

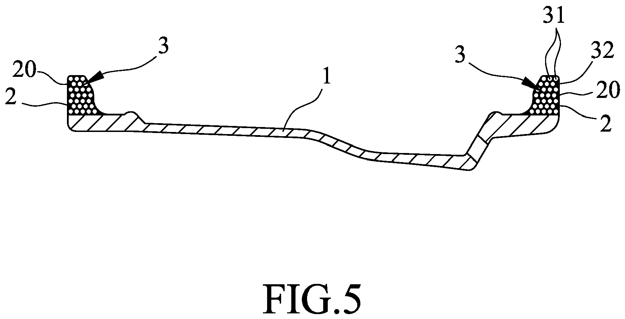

Referring to FIG. 5, a second embodiment according to the wheel rim of the present disclosure is shown. The second embodiment is similar to the first embodiment and the difference therebetween resides in that each of the reinforcing structures (3) further includes a foam material 32 filling a respective one of the spaces 20 of the rim 2 and surrounding the fiber bundles 31 fixed in the respective one of the spaces 20 of the rim 2. By virtue of the foam material 32, the overall structural strength of the wheel rim can be further enhanced and thereby provide another configuration of the wheel rim of the present disclosure.

To sum up, by virtue of reinforcing structures 3, the structural strength of the flanges 2 is increased and the weight of the wheel rim is not increased significantly. Thus, the object of the present disclosure can be indeed achieved.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A wheel rim comprising:
a rim body (1) surrounding an axis (A) and made of carbon fiber composite material, and
two flanges (2) protruding, radially and outwardly from an outer peripheral surface of said rim body (1), spaced apart from each other along the axis (A), and being made of carbon fiber composite material;
said wheel rim being **characterized in that**:
said flanges (2) define respectively two spaces (20) therein; and
said wheel rim further comprises two reinforcing structures (3) that are respectively received in said spaces (20), each of said reinforcing structures (3) including a plurality of fiber bundles (31) fixed in a respective one of said flanges (2), each of said fiber bundles (31) including at least two strands (311) of carbon fibers being twisted.

2. The wheel rim as claimed in Claim 1, further **characterized in that** each of said fiber bundles (31) includes two of said strands (311) twisted together in a direction opposite to that in which a corresponding one of said fiber bundles (31) is twisted.

3. The wheel rim as claimed in Claim 1, further **characterized in that** each of said fiber bundles (31) includes a core (312) and two of said strands (311) wound around said core (312) and twisted together in a direction opposite to that in which a corresponding one of said fiber bundles (31) is twisted.

4. The wheel rim as claimed in any one of Claims 1 to 3, further **characterized in that** each of said reinforcing structures (3) further includes a foam material (32) filling a respective one of said spaces (20) of said rim (2) and surrounding said fiber bundles (31) fixed in the respective one of said spaces (20) of said rim (2).
